# EUROPÄISCHE PATENTSCHRIFT

(11) **EP 3 710 344 B1**
(45) Veröffentlichungstag und Bekanntmachung des Hinweises auf die Patenterteilung: **31.03.2021**
(21) Anmeldenummer: 19712154.4
(22) Anmeldetag: 13.03.2019
(51) Int. Cl.: B62D 53/08

(54) **KUPPLUNGSSYSTEM**
COUPLING SYSTEM
SYSTÈME D'ACCOUPLEMENT

(30) Priorität: 15.03.2018 DE 102018105998
(43) Veröffentlichungstag der Anmeldung: 23.09.2020
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2019/056292
(87) Internationale Veröffentlichungsnummer: WO 2019/175246

(56) Entgegenhaltungen:
- EP-A1- 2 072 384
- DE-B- 1 041 806
- DE-T2- 60 102 393
- US-A- 2 062 806

## Beschreibung

Die vorliegende Erfindung betrifft ein Kupplungssystem für eine Sattelkupplung.

Kupplungssysteme für Sattelkupplungen an sich sind aus dem Stand der Technik bekannt. Auch ist es bekannt und üblich, zur Druckluft- und Energieversorgung des Anhängers eines Nutzfahrzeuges verschiedene Leitungsverbindungen zwischen dem Zugfahrzeug und dem Anhänger herzustellen. Üblicherweise werden hierfür elastische und vorzugsweise spiralförmig ausgebildete Leitungen direkt zwischen fest vorgesehenen Buchsen am Zugfahrzeug und am Anhänger verwendet. Weiterhin wurde in letzter Zeit auch versucht, unmittelbar im Bereich der mechanischen Kupplung, das heißt im Bereich der Kupplungsplatte und des Königszapfens, Möglichkeiten zu finden, Energie vom Zugfahrzeug auf den Anhänger zu übertragen. Bisher ist es aber noch nicht gelungen, ein Kupplungssystem für eine Sattelkupplung bereitzustellen, bei welchem eine Vielzahl von verschiedenen Leitungen am Zugfahrzeug und am Anhänger miteinander verbindbar ist und gleichzeitig die Möglichkeit eines automatisierten Kupplungsvorgangs zu schaffen.

Die DE 104 1806 B zeigt ein Kupplungssystem, bei dem ein Hohlzapfen eines Sattelaufliegers in eine Ausnehmung einer Zugmaschine eingeführt wird, wobei in dem Hohlzapfen eine elastisch nachgiebige Isolierbuchse gehalten ist.

EP 2 072 384 A1 zeigt eine Sattelkupplung, bei der ein Königszapfen eine zentrale Bohrung für elektrische und pneumatische Leitungen aufweist und bei der ein Verbindungsgehäuse unter einer Kupplungsplatte angeordnet ist.

DE 601 02 393 T2 und US-2,062,806 A beziehen sich auf Kupplungssysteme.

Aufgabe der vorliegenden Erfindung ist es, ein Kupplungssystem für eine Sattelkupplung bereitzustellen, welches zum einen eine große Zahl von verschieden Energieversorgungskanälen erlaubt und welches zum anderen vollautomatisierte Kupplungsvorgänge zwischen dem Zugfahrzeug und dem Anhänger erlaubt.

Diese Aufgabe wird durch ein Kupplungssystem gemäß Anspruch 1 gelöst. Weitere Merkmale und Vorteile der Erfindung ergeben sich aus den abhängigen Ansprüchen. Erfindungsgemäß umfasst das Kupplungssystem eine erste Steckereinheit und eine zweite Steckereinheit, wobei die erste Steckereinheit im Königszapfen einer Sattelkupplung festlegbar ist und wobei die zweite Steckereinheit im Bereich der Kupplungsplatte der Sattelkupplung festlegbar ist, wobei die erste Steckereinheit eine Vielzahl von ersten Steckeranschlüssen aufweist und wobei die zweite Steckereinheit eine Vielzahl von zweiten Steckeranschlüssen aufweist, welche zum Eingriff und zur Energie- und/oder Fluidübertragung mit den ersten Steckeranschlüssen ausgelegt sind, wobei zumindest eine Stelleinheit vorgesehen ist, welche zumindest einen Führungsabschnitt aufweist, der mit einem Halteelement an einer der Steckereinheiten in Eingriff bringbar ist, um eine längs der oder parallel zur Steckachse wirkende Kraft von der Stelleinheit auf die Steckereinheit zu übertragen, welche die jeweilige Steckereinheit entlang oder parallel zur Steckachse auf die jeweils gegenüberliegende Steckereinheit zu oder von dieser weg verlagert, wobei die Stelleinheit zur Aufbringung der Kraft transversal und quer zur Steckachse verlagerbar ist oder um die Steckachse drehbar ist. Das Kupplungssystem umfasst somit eine Steckereinheit, welche am Anhänger und somit im Königszapfen des Anhängers angeordnet ist und eine zweite Steckereinheit, welche im Bereich der Sattelkupplung und dort insbesondere an der Kupplungsplatte festgelegt ist. Die Steckereinheiten sind dabei jeweils mit einer Vielzahl von Leitungen verbunden, wobei die Leitungen jeweils in die ersten und zweiten Steckeranschlüsse münden. Wenn die erste und die zweite Steckereinheit zusammengekoppelt sind, sind die ersten Steckeranschlüsse jeweils mit den korrespondierend dazu angeordneten und ausgebildeten zweiten Steckeranschlüssen verbunden, so dass zwischen den Leitungen, welche vom Zugfahrzeug aus kommen, über die Steckeranschlüsse Energie und Fluide zu den Leitungen, welche sich am Anhänger befinden, übertragen werden können. Zumindest eine der Steckereinheiten ist dabei entlang einer Steckachse verlagerbar und ansonsten gegen Verlagerung quer zur Steckachse im Wesentlichen gesichert angeordnet. Dabei kann in einem ersten Zustand, in dem die Steckereinheiten voneinander beabstandet sind, der Kupplungsvorgang zwischen dem Königszapfen und der Kupplungsplatte stattfinden oder die Verbindung zwischen dem Königszapfen und der Sattelkupplung getrennt werden. Wenn der Königszapfen in der Sattelkupplung festgelegt ist, kommt die Stelleinheit zum Einsatz, welche dafür ausgebildet ist, eine der beiden Steckereinheiten entlang der Steckachse derart zu verlagern, dass diese mit der gegenüberliegenden Steckereinheit in Eingriff gelangt. Die Stelleinheit kann dabei entweder im Bereich der Sattelkupplung oder im Bereich des Königszapfens bzw. oberhalb des Königszapfens, angeordnet sein. Die Stelleinheit weist hierfür einen Führungsabschnitt auf, der mit einem korrespondierend ausgebildeten Halteelement an einer der beiden Steckereinheiten im formschlüssigen Eingriff steht, wobei eine transversale Verlagerung der Stelleinheit oder eine Verdrehung der Stelleinheit relativ zu der jeweiligen Steckereinheit eine Kraft, welche entlang oder parallel zur Steckachse wirkt, auf die Steckereinheit überträgt und diese in Richtung der gegenüberliegenden Steckereinheit oder von dieser weg verlagert. Es kann auf diese Weise mittels der Stelleinheit die Verbindung der Steckereinheiten hergestellt oder getrennt werden, wobei lediglich eine einfache Transversal- oder Drehbewegung der Stelleinheit benötigt wird und durch den Formschluss zwischen dem Halteelement und dem Führungsabschnitt diese Bewegung in eine Bewegung einer der Steckereinheiten entlang der Steckachse gewandelt wird. Die Stelleinheit ist dabei mit Vorteil von einem Motor oder einer Eingriffsgeometrie, am Zugfahrzeug oder am Anhänger angetrieben, was einen automatischen Betrieb der Stelleinheit erlaubt. Mit Vorteil kann hierdurch der automatische Kupplungsvorgang durchgeführt werden, d.h. ein Verbinden der Steckereinheiten ohne externen Eingriff durch einen Fahrzeugführer. Da die Steckereinheiten im zusammengesteckten Zustand keine Relativbewegungen relativ zueinander ausführen, also fest zusammen gesteckt sind, kann eine Vielzahl von nebeneinander angeordneten Steckeranschlüssen in einer Steckereinheit vorgesehen sein, welche formschlüssig ineinander greifen. Dies ist ein Unterschied zu den ebenfalls bekannten Ausführungsformen, bei denen Schleifkontakte zwischen einer ersten Steckereinheit und einer zweiten Steckereinheit jeweils fest mit dem Zugfahrzeug oder dem Anhänger verbunden sind. Bei der vorliegenden Erfindung ist zumindest eine der Steckereinheiten drehbar entweder zur Sattelkupplung oder zum Königszapfen ausgebildet, so dass eine feste Verbindung der Steckereinheiten miteinander hergestellt werden kann. Es lässt sich auf diese Weise die Anzahl der elektrischen Signal- und Energieübertragungsleitungen sowie der Fluidübertragungsleitungen maximieren, ohne, dass dabei der Durchmesser der Steckereinheiten derart vergrößert werden muss, dass diese nicht länger in einen Königszapfen hineinpassen. Auf diese Weise ermöglicht es die vorliegende Erfindung, das Kupplungssystem auch in Sattelkupplungen zu verwenden, bei denen lediglich die 2"-Königszapfen zum Einsatz gelangen, welche für die bisher aus dem Stand der Technik bekannten Lösungen zu klein sind oder nur eine unzureichend geringe Anzahl an einzelnen Kontakten erlauben. Zudem sind die aus dem Stand der Technik bekannten Lösungen fest mit einem drehbar gelagerten Königszapfen verbunden, wobei der Königszapfen durch außenliegende Komponenten vor einem Verbinden der Leitungen aufwändig in die richtige Position gedreht werden muss. Die Außenkontur der aus dem Stand der Technik bekannten Königszapfen entspricht dabei nicht der vorgeschriebenen und genormten Außenkontur und ist nur begrenzt kompatibel mit konventionellen Fahrzeugen. Dieses Problem wird durch die vorliegende Erfindung behoben, da mittels des kleinen Durchmessers der ersten Steckereinheit der Königszapfen mit genormten Außenmaßen ausgebildet sein kann und dennoch die erforderliche Festigkeit gewährleistet.

Bevorzugt sind in einem Zustand, in welchem die Kupplungsplatte mit dem Königszapfen verbunden ist, die erste Steckereinheit und die zweite Steckereinheit gegen Verlagerung quer zur Steckachse gesichert. Das Bezugssystem für die Lage der Steckachse ist somit der Königszapfen und/oder die Kupplungsplatte der Sattelkupplung. Mit anderen Worten ist die Steckachse bevorzugt erst dann definiert, wenn der Königszapfen an der Sattelkupplung festgelegt ist, wobei sich in diesem Zustand die erste Steckereinheit und die zweite Steckereinheit derart gegenüberliegen, dass die Steckanschlüsse beider Steckereinheiten sich im Wesentlichen parallel zur Steckachse erstrecken und somit eine reine Transversalbewegung einer der Steckereinheiten entlang der Steckachse ein Zusammenkoppeln der jeweiligen Steckeranschlüsse ermöglicht.

In einer ersten bevorzugten Ausführungsform ist die Stelleinheit derart ausgebildet und an entweder der Kupplungsplatte oder dem Königszapfen festgelegt, dass eine Verlagerungsbewegung nur entlang der Stellachse möglich ist. Bei dieser Ausführungsform führt eine Transversalbewegung der Stelleinheit entlang der Stellachse dazu, dass über den Führungsabschnitt das Halteelement und die mit dem Halteelement ausgestattete Steckereinheit entlang der Steckachse verlagert werden. Der Vorteil dieser Ausführungsform ist, dass die einfache und robuste Konstruktion insbesondere für den rauen Einsatz im freiliegenden Bereich einer Sattelkupplung eingesetzt werden kann, da die für einfache mechanische Bewegungen ausgelegte Komponenten der Stelleinheit unempfindlich gegen Schmutz und Fremdkörper sind.

Mit Vorteil verläuft die Stellachse dabei senkrecht zur Steckachse. Dies begünstigt insbesondere die Festlegung der Stelleinheit an der Kupplungsplatte einer Sattelkupplung, da hier mit geringem Bauraumbedarf sowohl die Stelleinheit selbst, als auch deren Antrieb platzsparend unterhalb der Kupplungsplatte angeordnet werden können.

Weiterhin bevorzugt weist bei dieser Ausführungsform der Führungsabschnitt der Stelleinheit ein distales erstes Ende und ein parallel zur Stellachse zum ersten Ende versetztes distales zweites Ende auf, wobei das erste Ende und das zweite Ende einen senkrecht zur Stellachse gemessenen Versatz zueinander aufweisen. Der Versatz des ersten und des zweiten Endes des Führungsabschnitts ist dabei vorzugsweise der Weg parallel zur Steckachse, um welchen das Halteelement verlagert wird, wenn die Stelleinheit entlang der Stellachse relativ zu der jeweiligen Steckereinheit bewegt wird. Besonders bevorzugt ist zwischen den distalen Enden des Führungsabschnitts eine Schräge am Führungsabschnitt ausgebildet, entlang derer das Halteelement formschlüssig entlang gleiten kann und dabei parallel zur Steckachse verlagert wird. Bevorzugt sind dabei die Steckereinheiten voneinander beabstandet, wenn das Halteelement mit dem ersten distalen Ende in Eingriff steht. In dem Zustand, in welchem sich das Haltelement im Bereich des zweiten distalen Endes befindet, und mit diesem in Eingriff steht, sind die Steckereinheiten miteinander verbunden.

In einer alternativ bevorzugten Ausführungsform ist die Stelleinheit drehbar um die Steckachse ausgebildet, wobei der Führungsabschnitt spiralförmig, bzw. schraublinienförmig, um die Steckachse gewunden ist. Dabei wird die Stelleinheit bevorzugt durch einen Elektromotor relativ zur Steckereinheit um die Steckachse in Rotation versetzt. Eine Verschiebebewegung der Stelleinheit längs einer Stellachse ist in dieser Ausführungsform nicht erforderlich. Vorteilhaft ist hierbei, dass bei geringer benötigter Antriebskraft zur Drehung der Stelleinheit die Stelleinheit und ihr Antrieb den geringstmöglichen Bauraumbedarf haben. Alternativ zur spiralförmigen Ausbildung des Führungsabschnitts kann die Stelleinheit auch längs der Stellachse verlagerbar sein, wobei jedoch die Stellachse parallel oder kollinear zur Steckachse steht. Dabei wird die Stelleinheit gemeinsam mit der formschlüssig in Eingriff stehenden Steckereinheit mittels eines Hubzylinders oder einer elektrisch betriebenen Spindel entlang der Stellachse verlagert, bis die Steckereinheit mit der jeweils gegenüberliegenden Steckereinheit in oder außer Eingriff gelangt. Der Vorteil dieser Ausführungsform ist, dass bei dieser Form der Betätigung die geringsten Reibungsverluste durch an einander reibende Geometrien des Halteelements und des Führungsabschnitts auftreten.

Mit Vorteil sind das erste Ende und das zweite Ende mit einer parallel zur Stellachse gemessenen Führungslänge voneinander beabstandet, wobei der Versatz ein 0,1-bis 0,3-faches der Führungslänge, oder ein 0,3- bis 0,8-faches der Führungslänge, oder ein 0,7- bis 1,2-faches der Führungslänge ist. Bei einem Verhältnisbereichs des Versatzes zur Führungslänge von 0,1 bis 0,3 ist der mittlere Anstieg der geneigten Ebene des Führungsabschnitts somit relativ gering und es sind nur geringe Kräfte nötig, um die Stelleinheit entlang der Stellachse zu verlagern. Der alternativ hierzu bevorzugte Bereich von 0,3 bis 0,8 des Verhältnisses des Versatzes zur Führungslänge ermöglicht dabei das Zurücklegen eines größeren Weges der Steckereinheit, welche mit der Stelleinheit in Eingriff steht, bei gleichzeitigem Einsparen von Bauraum, welcher für die Verlagerungsbewegungen der Stelleinheit benötigt wird. Im Falle von sehr begrenztem Bauraum im Bereich der Festlegung der Stelleinheit kann auch ein Verhältnisbereich des Versatzes zur Führungslänge von 0,7 bis 1,2 bevorzugt sein, da dann bei einem nur sehr geringen Verlagerungsweg der Stelleinheit entlang der Stellachse eine vergleichsweise große Weglänge, welche die Steckeinheit entlang der Steckachse zurücklegt, erreicht werden kann. In diesem Zusammenhang ist insbesondere ein Bereich von 0,2 bis 0,9 für das Verhältnis des Versatzes zur Führungslänge bevorzugt, wobei dieser Bereich einen guten Kompromiss aus möglichst geringer Weglänge an der Stelleinheit, möglichst geringem Reibungsverschleiß oder abrasivem Verschleiß an dem Führungsabschnitt der Stelleinheit und gleichzeitig einem möglichst großen Verlagerungsweg, welcher durch die Steckereinheit entlang der Steckachse zurückgelegt wird, erzielt.

Bevorzugt weisen das erste und/oder das zweite distale Ende des Führungsabschnitts einen Rastabschnitt auf. Der Rastabschnitt ist dabei ein Bereich des Führungsabschnitts, welcher sich entweder parallel zur Stellachse erstreckt, oder alternativ bevorzugt eine lokale Mulde, das heißt einen lokalen Rücksprung gegenüber den umgebenden Bereichen des Führungsabschnitts bildet, so dass das Halteelement nur durch Aufbringen einer definierten Kraft aus diesem Rastabschnitt wieder herausverlagert werden kann. Diese definierte Kraft ist dabei vorzugsweise größer als die Kräfte, welche bei üblichen Vibrationen an einem Nutzfahrzeug auftreten. Durch den Einsatz eines oder mehrerer Rastabschnitte an dem Führungsabschnitt kann auf eine zusätzliche Sicherung der Position der Stelleinheit relativ zur Steckereinheit und insbesondere dabei der Positionierung des Halteabschnitts im Führungsabschnitt verzichtet werden. Mit Vorteil weist der Rastabschnitt dabei einen lokal geringeren Versatz, welcher senkrecht zur Stellachse gemessen wird, auf, als die umgebenden Bereiche des Führungsabschnitts. Weiterhin bevorzugt kann an der ersten oder zweiten Steckereinheit ein entsprechendes Rückstellelement vorgesehen sein, welches das Steckerelement und das an diesem festgelegte Halteelement in den Rastabschnitt hineinpresst, so dass eine temporäre Verlagerungssicherung zwischen dem Steckerelement und der Stelleinheit gewährleistet ist.

Besonders bevorzugt weist die erste Steckereinheit eine erste Mitnehmergeometrie und die zweite Steckereinheit eine zweite Mitnehmergeometrie auf, wobei die erste und die zweite Mitnehmergeometrie derart ausgebildet sind, dass sie beim Zusammenführen der Steckereinheiten aneinander angreifen, und eine Drehung und/oder Ausrichtung der ersten und zweiten Steckeranschlüsse relativ zueinander um die Steckerachse bewirken, so dass jeder erste Steckeranschluss einem korrespondierendem zweiten Steckeranschluss parallel zur Steckachse gegenüberliegend angeordnet ist. Die Mitnehmergeometrie gewährleistet auf diese Weise, dass die beiden Steckereinheiten vor dem Zusammenkuppeln der Steckeranschlüsse jeweils korrekt zueinander ausgerichtet sind. Auf diese Weise gleichen die Mitnehmergeometrien an der ersten und der zweiten Steckereinheit somit insbesondere eine verwinkelte Position von Zugfahrzeug und Anhänger aus, so dass das Zusammenkoppeln des Zugfahrzeuges und des Anhängers nicht entlang einer Geraden erfolgen muss, sondern insbesondere eine winkelige Position möglich ist. Nachdem das Zugfahrzeug und der Anhänger zusammengekoppelt worden sind, wird in diesem Fall die Stelleinheit in Betrieb gesetzt und verlagert eine der Steckereinheiten derart auf die andere Steckereinheit zu, dass die Mitnehmergeometrien aneinander zur Anlage gelangen. Dabei weist zumindest eine der Mitnehmergeometrien eine schräge Fläche auf, welche das Entlanggleiten der jeweils gegenüberliegenden Mitnehmergeometrie so lange erforderlich macht, bis beide Mitnehmergeometrien in einer bestimmten Winkelstellung, rotierend um die Steckachse, gebracht wurden, wobei sich gleichzeitig auch der Abstand zwischen den Steckereinheiten verringert hat. In dieser Stellung liegt jedem der ersten Steckeranschlüsse vorzugsweise der jeweils für eine Kopplung vorgesehene und korrespondierende zweite Steckeranschluss gegenüber, so dass bei einer weiteren Verlagerungsbewegung der Steckereinheiten aufeinander zu das ordnungsgemäße Koppeln der Steckeranschlüsse miteinander stattfinden kann. Es versteht sich, dass hierfür zumindest eine der Steckereinheiten drehbar um die Steckachse an dem Zugfahrzeug oder an dem Anhänger gelagert ist.

Mit Vorteil sind die erste und/oder die zweite Mitnehmergeometrie als ebene Fläche ausgebildet, welche zu einer senkrecht zur Steckachse stehenden Ebene geneigt ist. Um bei einer Verlagerungsbewegung der Steckereinheiten entlang der aufeinander zu eine geneigte Ebene bereitzustellen, entlang derer die jeweils gegenüberliegende Mitnehmergeometrie gleiten kann, und dabei eine Verdrehbewegung zwischen den Steckereinheiten relativ zueinander stattfindet, ist die Mitnehmergeometrie oder vorzugsweise sind beide Mitnehmergeometrien als ebene Fläche ausgebildet, welche quer zu einer senkrecht zur Steckachse stehenden Ebene steht. Der Grad der Neigung ist dabei vorzugsweise im Bereich zwischen 20° und 60°, wobei in diesem Bereich eine zuverlässige Ausrichtung der beiden Steckereinheiten zueinander durch die Mitnehmergeometrie erreicht werden kann.

Mit Vorteil ist an der oder benachbart zu der ersten oder zweiten Mitnehmergeometrie ein Sicherungsvorsprung ausgebildet, welcher mit einer entsprechenden Sicherungsaussparung an der oder benachbart zur gegenüberliegenden Mitnehmergeometrie in Eingriff bringbar ist. Der Sicherungsvorsprung und die Sicherungsaussparung erstrecken sich dabei im Wesentlichen mit konstantem Querschnitt parallel zur Steckachse, wobei nach Erreichen der richtigen Drehposition der beiden Steckereinheiten zueinander der Sicherungsvorsprung längs der Steckachse in die Sicherungsaussparung einführbar ist. Die Kombination aus Sicherungsvorsprung und Sicherungsaussparung gewährleistet somit, nach Erreichen der richtigen Verdrehposition der Steckereinheiten zueinander nicht nur, dass eine weitere Verlagerungsbewegung der Steckereinheiten aufeinander zu parallel zur Steckachse möglich ist, sondern er sichert dabei gleichzeitig auch die Verdrehposition der beiden Steckereinheiten derart, dass eine zuverlässige Kopplung der Steckeranschlüsse stattfinden kann.

Mit Vorteil ist die erste Steckereinheit relativ zum Königszapfen um die Steckachse drehbar ausgelegt, wobei die Stelleinheit und die zweite Steckereinheit an der Kupplungsplatte angeordnet sind, wobei die Stelleinheit entlang der Stellachse verlagerbar an der Kupplungsplatte geführt ist. Die erste Steckereinheit ist dabei im Königszapfen drehbar gelagert, aber insbesondere gegen Verlagerung quer und parallel zur Steckachse gesichert. Dies ermöglicht, dass insbesondere bei Lenkbewegungen und Verschwenkung des Zugfahrzeuges relativ zum Anhänger die erste und die zweite Steckereinheit fest miteinander verbunden sein können, wobei die erste Steckereinheit innerhalb des Königszapfens jeweils rotiert. Es versteht sich, dass die an der ersten Steckereinheit angeordneten Leitungen daher flexibel ausgeführt sind und vorzugsweise mit einsprechenden Schleifen aus dem Bereich der ersten Steckereinheit hinausragen, um insbesondere ausreichenden Verformungsweg bereitzustellen, welcher durch die Schwenkbewegungen des Zugfahrzeuges relativ zum Anhänger verursacht ist.

Weiterhin bevorzugt weist die Stelleinheit ein Stellgehäuse auf, wobei der Führungsabschnitt einstückig an dem Stellgehäuse ausgebildet ist. Das Stellgehäuse der Stelleinheit ist vorzugsweise ein im Wesentlichen quaderförmig geformte Hohlkörper, wobei der Führungsabschnitt insbesondere bevorzugt als Aussparung an diesem Stellgehäuse ausgebildet ist. Das Stellgehäuse der Stelleinheit gewährleistet dabei eine hohe Festigkeit und gleichzeitig auch eine Verringerung der Anzahl der erforderlichen Bauteile, was eine besonders robuste Konstruktion ergibt, die sich besonders für den Einsatz unterhalb der Kupplungsplatte einer Sattelkupplung eignet. Vorzugsweise können in dem Stellgehäuse noch Vorratsbereiche für Schmiermittel vorgesehen sein, welche eine konstante Schmierung des Führungsabschnitts ermöglichen, um sowohl den Reibungswiderstand als auch den Verschleiß am Führungsabschnitt gering zu halten.

Besonders bevorzugt umfassen die erste und die zweiten Steckeranschlüsse jeweils erste und zweite elektrische Anschlüsse und erste und zweite Fluidübertragungsanschlüsse. Dabei ist mit Vorteil die Anzahl der elektrischen Anschlüsse höher als die Anzahl der Fluidübertragungsanschlüsse. In einer besonders bevorzugten Ausführungsform sind zumindest zwei Fluidübertragungsanschlüsse jeweils an der ersten und der zweiten Steckereinheit ausgebildet, wobei vorzugsweise eine Vielzahl, und insbesondere bevorzugt mehr als fünf elektrische Anschlüsse jeweils an der ersten und der zweiten Steckereinheit ausgebildet sind. In einer besonders bevorzugten Ausführungsform sind mindestens 7 elektrische Steckeranschlüsse an jeder Steckereinheit ausgebildet, so dass neben elektrischen Versorgungsleitungen auch eine Vielzahl von Signalleitungen zur Verfügung steht. Hierdurch ist es möglich, bei einer Vielzahl von ansteuerbaren Funktionen, den Anteil der am Anhänger erforderlichen Regelungssysteme zu verringern und diese in die am Zugfahrzeug vorhandenen Systeme zu integrieren. Besonders bevorzugt sind dabei die ersten und die zweiten Steckeranschlüsse kompakt aneinander angeordnet, um dem im Königszapfen zur Verfügung stehenden Bauraum möglichst optimal auszunutzen. Dabei ist die Summe der jeweils äußeren Querschnitte aller Steckeranschlüsse zusammengerechnet vorzugsweise ein 0,5- bis 0,8-faches der Gesamtquerschnittsfläche der jeweiligen Steckereinheit in einer Schnittebene senkrecht zur Steckachse auf Höhe der jeweiligen Steckeranschlüsse.

Besonders bevorzugt weist die Stelleinheit einen Betätigungsabschnitt auf, an welchem eine parallel zur Stellachse wirkende Kraft in die Stelleinheit einleitbar ist. Der Betätigungsabschnitt ist dabei vorzugsweise eine Eingriffsgeometrie, an welcher ein entsprechendes Element oder ein Motor derart angreifen können, dass eine Verlagerung der Stelleinheit parallel zur Stellachse bewirkt wird. Dabei ist der Betätigungsabschnitt insbesondere für formschlüssigen Eingriff ausgelegt, das heißt vorzugsweise als Gewinde oder als Hinterschneidungsbereich.

Mit Vorteil ist der Betätigungsabschnitt als Gewindespindel ausgebildet. An einem als Gewindespindel ausgebildeten Betätigungsabschnitt kann unmittelbar ein Getriebe, welches von einem Elektromotor angetrieben wird, angeschlossen werden. Alternativ zu einer Ausbildung als Gewindespindel kann der Betätigungsabschnitt auch an einem Kolben eines Pneumatikzylinders angeschlossen oder einstückig mit diesem verbunden sein, um eine Bewegung des Kolbens in eine Bewegung der Stelleinheit parallel zur Stellachse zu bewirken.

Erfindungsgemäß weist die erste Steckereinheit eine im Wesentlichen zylindrische Außengeometrie auf, wobei ein Halteflansch an der zylindrischen Außengeometrie der ersten Steckereinheit ausgebildet ist. Die zylindrische Außengeometrie der ersten Steckereinheit erlaubt deren Einsatz innerhalb eines Königszapfens. Der Halteflansch dient dabei der Verhinderung von Verlagerung parallel und vorzugsweise auch quer zur Steckachse relativ zum Königszapfen bei gleichzeitigem Ermöglichen von Rotation um die Steckachse relativ zum Königszapfen. Es versteht sich, dass alternativ oder zusätzlich zum Halteflansch an der ersten Steckereinheit auch die zweite Steckereinheit über einen Halteflansch drehbar an der Kupplungsplatte gelagert und gehalten sein kann. Besonders bevorzugt bildet der Halteflansch dabei eine Lauffläche eines Axiallagers, beispielsweise eines Stirnrollenlagers, und unterstützt somit eine besonders leichtgängige Drehbarkeit der jeweiligen Steckereinheit.

Weiterhin bevorzugt ist die erste Steckereinheit mit einer Spielpassung in einer korrespondierenden Eingriffsgeometrie am Königszapfen angeordnet. Die Spielpassung erlaubt eine Rotation und ist aber mit Vorteil derart eng gewählt, dass ein Schwingen der Steckereinheit mit großen Amplituden relativ zum Königszapfen verhindert ist. Zur Unterstützung der Führung der Steckereinheit sind mit Vorteil Gleit- und/oder Führungsbuchsen im Bereich der Aussparung am Königszapfen vorgesehen. Diese Buchsen können besonders bevorzugt mit selbstschmierendem Material ausgestattet sein, was den Verschleiß an der Steckereinheit reduziert und die Leichtgängigkeit der Drehung im Königszapfen verbessert.

Weitere Vorteile und Merkmale der vorliegenden Erfindung ergeben sich aus der nachfolgenden Beschreibung mit Bezug auf die beigefügten Figuren. Es versteht sich, dass einzelne Merkmale, die nur in einer der Ausführungsformen gezeigt wurden, auch in Ausführungsformen anderer Figuren zur Anwendung kommen können, sofern dies nicht explizit ausgeschlossen wurde oder sich aufgrund technischer Gegebenheiten verbietet. Es zeigen:
- Fig. 1: eine Schnittansicht einer ersten bevorzugten Ausführungsform des erfindungsgemäßen Kupplungssystems;
- Fig. 2: eine zweite Schnittansicht des in Fig. 1 gezeigten Kupplungssystems;
- Fig. 3: eine Schnittansicht eines bevorzugten Kupplungssystemes in einem ersten Zustand;
- Fig. 4: eine Schnittansicht eines bevorzugten Kupplungssystemes in einem zweiten Zustand;
- Fig. 5: eine Ansicht einer ersten und einer zweiten Steckereinheit;
- Fig. 6: eine perspektivische Ansicht auf eine bevorzugte ausführungsform eines erfindungsgemäßen Kupplungssystems;
- Fig. 7: eine Seitenansicht einer bevorzugten Ausführungsform einer Stelleinheit, und
- Fig. 8: eine perspektivische Ansicht der Unterseite einer Kupplungsplatte mit.

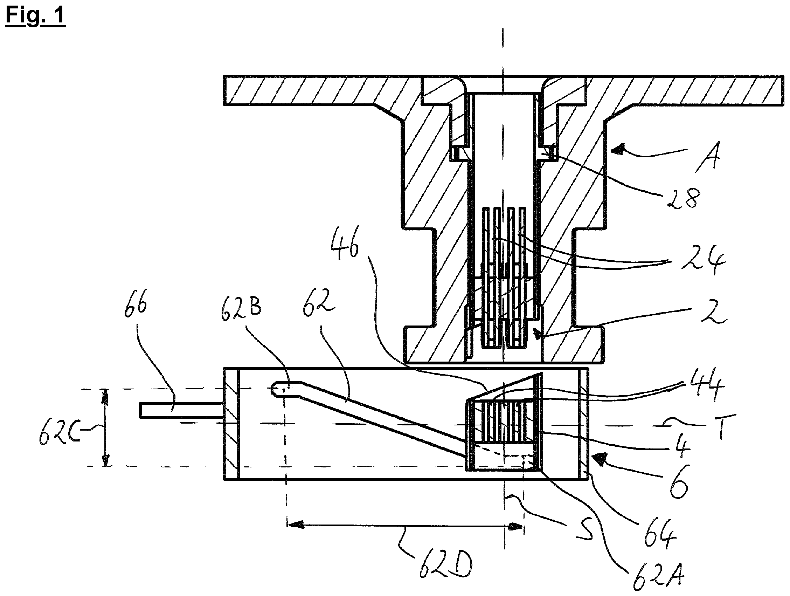

Die in Fig. 1 gezeigte bevorzugte Ausführungsform des Kupplungssystems zeigt einen Königszapfen A in einer Stellung, in welcher dieser an einer nicht gezeigten Kupplungsplatte B der Sattelkupplung festgelegt ist. In dieser Stellung liegen sich eine erste Steckereinheit 2 und eine zweite Steckereinheit 4 gegenüber und sind entlang einer Steckachse S versetzt zueinander. Die zweite Steckereinheit 4 ist dabei vorzugsweise an der Kupplungsplatte B (nicht gezeigt) einer Sattelkupplung derart gelagert, dass eine Bewegung nur entlang der Steckachse S möglich ist. Ebenfalls an der Kupplungsplatte B gelagert ist eine Stelleinheit 6, welche quer zur Steckachse S und insbesondere bevorzugt parallel zu einer Stellachse T relativ zur Kupplungsplatte B und zur zweiten Steckereinheit 4 transversal verlagert werden kann. Die Stelleinheit 6 weist ein Gehäuse 64 mit einem Führungsabschnitt 62 auf, welcher einen Versatz 62C eines ersten distalen Endes 62A und eines zweiten distalen Endes 62B aufweist. Wenn die in der Figur gezeigte Stelleinheit 6 nach rechts verlagert wird, wird zumindest ein an der zweiten Steckereinheit 4 vorgesehenes Halteelement 42 (in dieser Darstellung verdeckt) innerhalb des Führungsabschnitts 62 derart geführt, dass eine Transversalbewegung der zweiten Steckereinheit 4 parallel zur Steckachse S stattfindet und die zweite Steckereinheit 4 nach oben in Richtung der ersten Steckereinheit 2 verlagert wird. Bei diesem Vorgang wird die zweite Steckereinheit 4 um den am Führungsabschnitt 62 vorgesehenen Versatz 62C entlang der Steckachse S bewegt. Der Versatz 62C ist derart dimensioniert, dass die zweite Steckeinheit in dem vollständig nach unten gefahrenen Zustand, wie er in Fig. 1 gezeigt ist, innerhalb des von dem Gehäuse 64 der Stelleinheit 6 aufgespannten Volumens angeordnet ist. Auf diese Weise kann die zweite Steckereinheit gegen mechanische Beschädigungen innerhalb der Stelleinheit geschützt angeordnet sein. Nicht dargestellt sind in dieser Ausführungsform die Führungsmittel, welche an der Kupplungsplatte B der Sattelkupplung festgelegt oder einstückig mit dieser ausgeführt sind, und welche die zweite Steckereinheit 4 gegen Verlagerung quer zur Steckachse S sichern. Diese Führungsmittel können beispielsweise als Backen ausgebildet sein, welche durch die Stelleinheit hindurchragen. Alternativ hierzu können diese Führungsmittel auch Aussparungen sein, in welche die zweite Steckereinheit 4 insbesondere bevorzugt mittels eines verlängerten Halteelements 42 in Eingriff gelangt. Weiterhin dargestellt ist auch die Führungslänge 62D des Führungsabschnitts 62, welche die Erstreckung des Führungsabschnitts 62 parallel zur Stellachse T ist. Der Versatz 62C steht in dieser bevorzugten Ausführungsform zur Führungslänge 62D in einem Verhältnisbereich von 0,2 bis 0,4. Dieser verhältnismäßig geringe Anstieg des Führungsabschnitts vom ersten Ende 62A bis zum zweiten Ende 62B ermöglicht, dass bereits bei einer geringen Kraft, welche an das Gehäuse 64 der Stelleinheit 6 übertragen wird, die zweite Steckereinheit 4 zuverlässig mit der ersten Steckereinheit 2 gekoppelt werden kann, ohne dass hierbei große Reibungsverluste sowie Oberflächenverschleiß aufgrund von Gleitreibung stattfindet. Zum Einleiten der Kraft in das Gehäuse 64 der Stelleinheit 6 ist ein Betätigungsabschnitt 66 vorgesehen, welcher in Fig. 1 nur sehr schematisch dargestellt ist. Der Betätigungsabschnitt 66 ist bevorzugt eine Gewindespindel, an welcher eine entsprechende Verzahnung eingreift, um die Stelleinheit 6 entlang der Stellachse T zu verlagern. Die erste Steckereinheit 2 weist eine im Wesentlichen zylindrische Außengeometrie auf, wobei ein Halteflansch 28 an dem zylindrischen Außengehäuse der ersten Steckereinheit 2 ausgebildet ist. Der Halteflansch 28 ist dafür ausgelegt, an einer entsprechenden Schulter innerhalb der Aussparung im Königszapfen A zur Anlage zu gelangen und von in Figur 1 oben mit einem entsprechenden Halteelement gesichert zu werden. Dabei ist mit Vorteil die erste Steckereinheit 2 und auch der Halteflansch 28 in den jeweiligen Eingriffsgeometrien mit Spielpassung eingesetzt, so dass insbesondere eine Rotation der ersten Steckereinheit 2 um die Steckachse S möglich bleibt. Diese Rotation der ersten Steckereinheit 2 ist bevorzugt, damit auch bei einer verdrehten Anfangsanordnung der ersten Steckereinheit 2 und der zweiten Steckereinheit 4 zueinander im Verlauf des Ankoppelvorgangs die erste Steckereinheit 2 derart um die Steckachse S rotiert bzw. gedreht werden kann, dass kurz vor dem Zusammenkoppeln die jeweils korrespondierenden Steckeranschlüsse 24, 44 einander gegenüberliegend angeordnet sind und zusammengekoppelt werden können. Hierfür weisen die erste Steckereinheit 2 und die zweite Steckereinheit 4 jeweils Mitnehmergeometrien 26, 46 auf, welche diese korrekte Ausrichtung der Steckereinheiten 2, 4 zueinander herbeiführen.

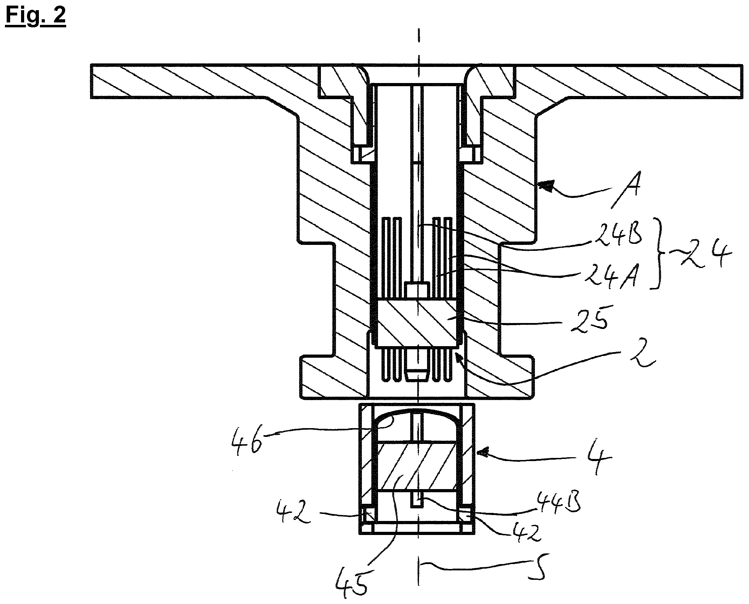

Fig. 2 zeigt eine Schnittansicht der in Fig. 1 gezeigten Ausführungsform des Kupplungssystems, wobei die Schnittebene in Fig. 2 senkrecht zu der Schnittebene von Fig. 1 steht. Erkennbar ist dabei die zweite Mitnehmergeometrie 46, welche auch schon in Fig. 1 dargestellt ist und vorzugsweise als schräge bzw. geneigte Fläche bezogen auf eine senkrecht zur Steckachse S stehende Ebene ausgebildet ist. Weiterhin ist erkennbar, dass benachbart zu den ersten Fluidübertragungsanschlüssen 24B, welche in Fig. 1 erkennbar sind, erste elektrische Anschlüsse 24A vorgesehen sind. Bevorzugt sind mindestens vier elektrische Anschlüsse 24A, 44A jeweils an der ersten und der zweiten Steckereinheit 2, 4 vorgesehen. Mit Vorteil sind die ersten elektrischen Anschlüsse 24A und die ersten Fluidübertragungsanschlüsse 24B in einem Steckerblock 25 der ersten Steckereinheit 2 gehalten. Dabei sind die ersten Steckeranschlüsse 24 mit Vorteil durch Aussparungen im Steckerblock 25 hindurchgeführt und dort festgeklebt. Auch an der zweiten Steckereinheit 4 ist eine entsprechende Festlegung der zweiten Steckeranschlüsse 44 vorgesehen, wobei in Fig. 2 nur der zweite Steckerblock 45 und einer der zweiten Fluidübertragungsanschlüsse 44B dargestellt sind.

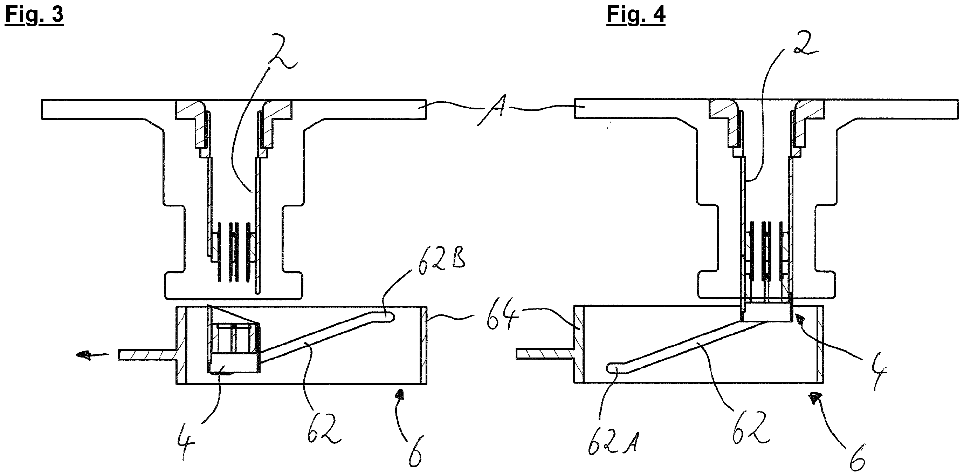

Fig. 3 und Fig. 4 zeigen zwei Betriebszustände einer bevorzugten Ausführungsform des erfindungsgemäßen Kupplungssystems. Fig. 3 zeigt dabei den Zustand, in welchem gerade begonnen wurde, die Stelleinheit 6 nach links zu verlagern, wobei zu erkennen ist, dass insbesondere im Unterschied zu dem in Fig. 1 dargestellten Zustand die zweite Steckereinheit 4 an ihrem oberen Ende bereits aus dem vom Gehäuse 64 der Stelleinheit 6 aufgespannten Volumen leicht hinausragt. Indem die Stelleinheit 6 weiter nach links verlagert wird und der Führungsabschnitt 62 das an der zweiten Steckereinheit 4 ausgebildete Halteelement 42 formschlüssig führt, verlagert sich die zweite Steckereinheit 4 nach oben in Richtung der ersten Steckereinheit 2. Fig. 4 schließlich zeigt den Zustand, in dem die Stelleinheit 6 vollständig nach links verlagert wurde und das Halteelement 42 (vorzugsweise zwei Halteelemente 42 von denen nur eines gezeigt ist) an dem zweiten distalen Ende 62B des Führungsabschnitts 62 angelangt ist, wobei in diesem Zustand die ersten Steckeranschlüsse 24 und die zweiten Steckeranschlüsse 44 miteinander gekoppelt sind.

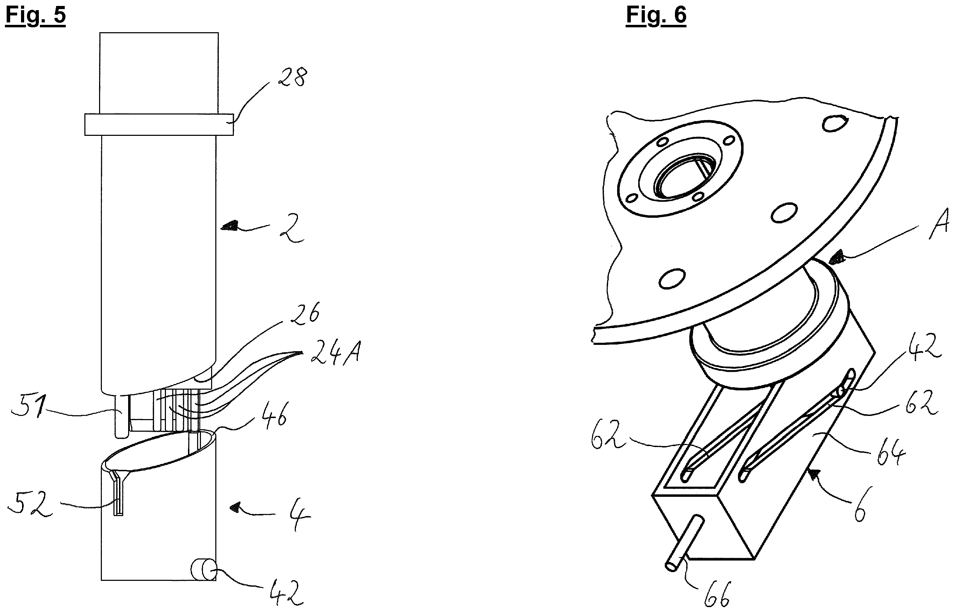

Fig. 5 zeigt eine Detailansicht der ersten Steckereinheit 2 und der zweiten Steckereinheit 4. Es ist dabei gezeigt, dass die erste Steckereinheit 2 ein im Wesentlichen zylindrisches Gehäuse aufweist, an welchem ein Halteflansch 28 ausgebildet ist. Das Gehäuse gemeinsam mit dem Halteflansch 28 dient dazu, die erste Steckereinheit 2 in eine Aussparung am Königszapfen A mit einer Spielpassung einzusetzen, wobei die erste Steckereinheit 2 über den Halteflansch 28 gegen Verlagerung längs der Steckachse S gesichert ist und ansonsten drehbar im Königszapfen A angeordnet ist. Die leichtgängig drehbare Lagerung der ersten Steckereinheit 2 ist insbesondere wichtig, um während des Zusammenkoppelns der ersten Steckereinheit 2 und der zweiten Steckereinheit 4 eine Verdrehbewegung ausführen zu können, so dass die Steckeranschlüsse 24, 44 an beiden Steckereinheiten 2, 4 einander gegenüberliegend angeordnet werden können. Zum anderen ist im zusammengekoppelten Zustand wichtig, dass die erste Steckereinheit 2 sich relativ zum Königszapfen A drehen kann, um eine Lenkbewegung des Zugfahrzeuges relativ zum Anhänger ausgleichen zu können. Die zweite Steckereinheit 4 ist in der vorliegenden bevorzugten Ausführungsform vorzugsweise gegen Verdrehung relativ zur Kupplungsplatte B der Sattelkupplung gesichert. Somit muss sämtlicher Ausgleich von Lenkbewegungen bzw. Schwenkbewegungen zwischen dem Zugfahrzeug und dem Anhänger durch die drehbare Lagerung der ersten Steckereinheit 2 innerhalb des Königszapfens A ausgeglichen werden. An der ersten Steckereinheit 2 ist vorzugsweise ein Sicherungsvorsprung 51 ausgebildet, welcher im Wesentlichen parallel zur Steckerachse S nach unten von der ersten Mitnehmergeometrie 26 absteht. Bei einem Zusammenkoppelvorgang der ersten Steckereinheit 2 und der zweiten Steckereinheit 4 gleitet der Sicherungsvorsprung zunächst entlang der zweiten Mitnehmergeometrie 46 an der zweiten Steckereinheit 4 ab, bis die richtige Lage der ersten Steckereinheit 2 zur zweiten Steckereinheit 4 erreicht ist. Schließlich, kurz vor dem Zusammenkoppeln der ersten und zweiten Steckeranschlüsse 24, 44 gelangt der Sicherungsvorsprung 51 mit einer Sicherungsaussparung 52 in Eingriff, welche an der zweiten Steckereinheit 4 vorgesehen ist. In diesem Zustand unterstützt der formschlüssige Eingriff zwischen dem Sicherungsvorsprung 51 und der Sicherungsaussparung 52 das Halten der Verdrehposition der ersten Steckeranschlüsse 24 gegenüber den zweiten Steckeranschlüssen 44 derart, dass diese ohne Gefahr von Verkanten miteinander gekoppelt werden können.

Fig. 6 zeigt eine perspektivische Ansicht einer bevorzugten Ausführungsform des erfindungsgemäßen Kupplungssystems. Dabei ist insbesondere die Form des Gehäuses 64 der Stelleinheit 6 verdeutlicht, welches einen im Wesentlichen rechteckigen Grundriss aufweist, ein quaderförmiges Volumen aufspannt und an seinen beiden langen Seiten je einen Führungsabschnitt 62 aufweist.

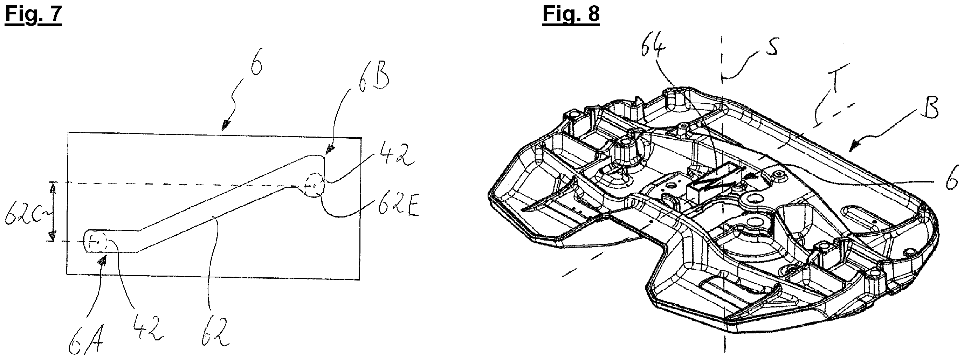

Fig. 7 zeigt eine Seitenansicht einer bevorzugten Ausführungsform der Stelleinheit 6 mit einem als Aussparung ausgebildeten Führungsabschnitt 62. Der Führungsabschnitt 62 weist, wie in den zuvor gezeigten Ausführungsformen, ein erstes Ende 62A und ein zweite Ende 62B auf. Im Unterschied zu den zuvor gezeigten Ausführungsformen ist am zweiten Ende 62B ein Rastabschnitt 62E ausgebildet, welcher als Vertiefung im Bereich des zweiten Endes 62B geformt ist. Im Rastabschnitt 62E gelangt das gestrichelt dargestellte Halteelement 42 in Eingriff und kann, insbesondere bei im Betrieb des Nutzfahrzeuges und auftretenden Vibrationen und Stößen, sicher in dieser Position gehalten werden, ohne dass permanent eine Haltekraft an der Stelleinheit 6 anliegen muss, die diese nach in der Figur links zieht. Bei Vorhandensein eines Rastabschnitts 62E wird der Versatz 62C jeweils zwischen den Positionen des Halteelements 42 am ersten Ende 62A und im Rastabschnitt 62E gemessen, wie dies auch in der Figur dargestellt ist.

Fig. 8 zeigt eine perspektivische Ansicht der Unterseite einer Kupplungsplatte B einer Sattelkupplung mit der daran angeordneten Stelleinheit 6. Die Stelleinheit 6 weist dabei, wie zu den vorherigen Ausführungsformen beschrieben, ein Gehäuse 64 auf, welches an der Kupplungsplatte B längs der Stellachse T geführt gelagert ist.

Bezugszeichen:

| | | | |
|---|---|---|---|
| 2 | - erste Steckereinheit | 51 | - Sicherungsvorsprung |
| 24 | - erste Steckeranschlüsse | 52 | - Sicherungsaussparung |
| 24A | - erster elektrischer Anschluss | 6 | - Stelleinheit |
| 24B | - erster Fluidübertragungsanschluss | 62 | - Führungsabschnitt |
| | | 62A | - erstes Ende |
| 25 | - erster Steckerblock | 62B | - zweites Ende |
| 26 | - erste Mitnehmergeometrie | 62C | - Versatz |
| 28 | - Halteflansch | 62D | - Führungslänge |
| 4 | - zweite Steckereinheit | 62E | - Rastabschnitt |
| 42 | - Halteelement | 64 | - Gehäuse |
| 44 | - zweite Steckeranschlüsse | 66 | - Betätigungsabschnitt |
| 44A | - zweiter elektrischer Anschluss | A | - Königszapfen |
| | | B | - Kupplungplatte |
| 44B | - zweiter Fluidübertragungsanschluss | S | - Steckachse |
| | | T | - Stellachse |
| 45 | - zweiter Steckerblock | | |
| 46 | - zweite Mitnehmergeometrie | | |

## Patentansprüche

1. Kupplungssystem für eine Sattelkupplung, umfassend eine erste Steckereinheit (2) und eine zweite Steckereinheit (4),
wobei die erste Steckereinheit (2) im Königszapfen (A) einer Sattelkupplung festlegbar ist,
wobei die zweite Steckereinheit (4) im Bereich der Kupplungsplatte (B) der Sattelkupplung angeordnet ist,
wobei die erste Steckereinheit (2) eine Vielzahl von ersten Steckeranschlüssen (24) aufweist,
wobei die zweite Steckereinheit (4) eine Vielzahl von zweiten Steckeranschlüssen (44) aufweist, welche zum Eingriff und zur Energie- und/oder Fluidübertragung mit den ersten Steckeranschlüssen (24) ausgelegt sind,
wobei zumindest eine Stelleinheit (6) vorgesehen ist, welche zumindest einen Führungsabschnitt (62) aufweist, der mit einem Halteelement (42) der zweiten Steckereinheit (4) in Eingriff bringbar ist, um eine längs der oder parallel zur Steckachse (S) wirkendende Kraft von der Stelleinheit (6) auf die Steckereinheit (4) zu übertragen, welche die zweite Steckereinheit (4) entlang oder parallel zur Steckachse (S) auf die gegenüberliegende erste Steckereinheit (2) zu oder von dieser weg verlagert,
wobei die Stelleinheit (6) zur Aufbringung der Kraft transversal und quer zur Steckachse (S) verlagerbar ist oder um die Steckachse (S) drehbar ist wobei die erste Steckereinheit (2) eine im Wesentlichen zylindrische Außengeometrie aufweist,
**dadurch gekennzeichnet, dass** ein Halteflansch (28) an der zylindrischen Außengeometrie der ersten Steckereinheit (2) ausgebildet ist und der Verhinderung von Verlagerung parallel und vorzugsweise auch quer zur Steckachse relativ zum Königszapfen bei gleichzeitigem Ermöglichen von Rotation um die Steckachse relativ zum Königszapfen dient.

2. Kupplungssystem nach Anspruch 1,
wobei die erste Steckereinheit (2) und die zweite Steckereinheit (4) gegen Verlagerung quer zur Steckachse (S) gesichert sind.

3. Kupplungssystem nach einem der vorhergehenden Ansprüche,
wobei die Stelleinheit (6) nur entlang einer Stellachse (T) verlagerbar und ansonsten gegen Verlagerung relativ zum Königszapfen (A) oder zur Kupplungsplatte (B) gesichert ist.

4. Kupplungssystem nach Anspruch 3,
wobei die Stellachse (T) senkrecht zur Steckachse (S) verläuft.

5. Kupplungssystem nach einem der Ansprüche 3 oder 4,
wobei der Führungsabschnitt (62) ein distales erstes Ende (62A) und ein parallel zur Stellachse (T) zum ersten Ende (62A) versetztes, distales zweites Ende (62B) aufweist,
wobei das erste Ende (62A) und das zweite Ende (62B) einen senkrecht zur Stellachse (T) gemessenen Versatz (62C) zueinander aufweisen.

6. Kupplungssystem nach Anspruch 5,
wobei das erste Ende (62A) und das zweite Ende (62B) mit einer parallel zur Stellachse (T) gemessenen Führungslänge (62D) voneinander beabstandet sind.

7. Kupplungssystem nach einem der Ansprüche 5 oder 6,
wobei das erste und/oder das zweite Ende (62A, 62B) einen Rastabschnitt (62E) aufweist/aufweisen.

8. Kupplungssystem nach einem der vorhergehenden Ansprüche,
wobei die erste Steckereinheit (2) eine erste Mitnehmergeometrie (26) und die zweite Steckereinheit (4) eine zweite Mitnehmergeometrie (46) aufweist, wobei die erste und die zweite Mitnehmergeometrie (26, 46) derart ausgebildet sind, dass die beim Zusammenführen der Steckereinheiten (2,4) aneinander angreifen und eine Drehung und/oder Ausrichtung der ersten und zweiten Steckeranschlüsse (24, 44) relativ zueinander um die Steckachse (S) bewirken, so dass jeder erste Steckeranschluss (24) einem korrespondierenden zweiten Steckeranschluss (44) parallel zur Steckachse (S) gegenüberliegend angeordnet ist.

9. Kupplungssystem nach Anspruch 8,
wobei die erste und/oder die zweite Mitnehmergeometrie (26, 46) als ebene Fläche ausgebildet ist, welche zu einer senkrecht zur Steckachse (S) stehenden Ebene geneigt ist.

10. Kupplungssystem nach einem der Ansprüche 8 oder 9,
wobei an der oder benachbart zur ersten oder zweiten Mitnehmergeometrie (26, 46) ein Sicherungsvorsprung (51) ausgebildet ist, welcher mit einer entsprechende Sicherungsaussparung (52) an der oder benachbart zur gegenüberliegenden Mitnehmergeometrie (26, 46) in Eingriff bringbar ist.

11. Kupplungssystem nach einem der vorhergehenden Ansprüche,
wobei die erste Steckereinheit (2) relativ zum Königszapfen (A) um die Steckachse (S) drehbar ausgelegt ist,
wobei die Stelleinheit (6) und die zweiten Steckereinheit (4) an der Kupplungsplatte (B) angeordnet sind,
wobei die Stelleinheit (6) entlang der Stellachse (T) verlagerbar an der Kupplungsplatte (B) geführt ist.

12. Kupplungssystem nach einem der vorhergehenden Ansprüche,
wobei die Stelleinheit (6) ein Gehäuse (64) umfasst,
wobei der Führungsabschnitt (62) einstückig an dem Gehäuse (64) ausgebildet ist.

13. Kupplungssystem nach einem der vorhergehenden Ansprüche,
wobei die ersten und die zweiten Steckeranschlüsse (24, 44) erste und zweite elektrische Anschlüsse (24A, 44A) und erste und zweite Fluidübertragungsanschlüsse (24B, 44B) aufweisen.

14. Kupplungssystem nach einem der vorhergehenden Ansprüche,
wobei die Stelleinheit (6) einen Betätigungsabschnitt (66) aufweist, an welchem eine parallel zur Stellachse (T) wirkende Kraft in die Stelleinheit (6) einleitbar ist.

## Claims

1. A coupling system for a fifth wheel coupling, comprising a first plug unit (2) and a second plug unit (4),
wherein the first plug unit (2) can be fixed in the king pin (A) of a fifth wheel coupling,
wherein the second plug unit (4) is arranged in the region of the coupling plate (B) of the fifth wheel coupling,
wherein the first plug unit (2) has a plurality of first plug connectors (24), wherein the second plug unit (4) has a plurality of second plug connectors (44) adapted to engage and transmit power and/or fluid with the first plug connectors (24),
wherein at least one adjuster unit (6) is provided which has at least one guide section (62) which can be brought into engagement with a retaining element (42) on the second plug unit (4) in order to transmit a force acting along or parallel to the plug-in axis (S) from the adjuster unit (6) to the plug unit (4), which displaces the second plug unit (4) along or parallel to the plug-in axis (S) towards or away from the opposite first plug unit (2),
the adjuster unit (6) being displaceable transversely and laterally to the plug-in axis (S) or rotatable about the plug-in axis (S) in order to apply the force, wherein the first plug unit (2) has a substantially cylindrical outer geometry, **characterized in that** a retaining flange (28) is formed on the cylindrical outer geometry of the first plug unit (2) serves to prevent displacement parallel and preferably also transverse to the plug-in axis relative to the kingpin while simultaneously allowing rotation about the plug-in axis relative to the kingpin.

2. The coupling system according to claim 1,
wherein the first plug unit (2) and the second plug unit (4) are secured against displacement laterally to the plug-in axis (S).

3. The coupling system according to any one of the preceding claims,
wherein the adjuster unit (6) can only be displaced along an adjusting axis (T) and is otherwise secured against displacement relative to the king pin (A) or the coupling plate (B).

4. The coupling system according to claim 3,
wherein the adjusting axis (T) is perpendicular to the plug-in axis (S).

5. The coupling system according to one of claims 3 or 4,
wherein the guide section (62) has a distal first end (62A) and a distal second end (62B) offset from the first end (62A) parallel to the adjusting axis (T), wherein the first end (62A) and the second end (62B) have an offset (62C) relative to each other measured perpendicular to the adjusting axis (T).

6. The coupling system according to claim 5,
wherein the first end (62A) and the second end (62B) are spaced apart from each other by a guide length (62D) measured parallel to the adjusting axis (T).

7. The coupling system according to one of claims 5 or 6,
wherein the first and/or the second end (62A, 62B) has/have a detent section (62E).

8. The coupling system according to any one of the preceding claims,
wherein the first plug unit (2) has a first driver geometry (26) and the second plug unit (4) has a second driver geometry (46),
wherein the first and second driver geometries (26, 46) are designed in such a way that when the plug units (2, 4) are brought together they engage with one another and cause the first and second plug connectors (24, 44) to rotate and/or align relative to one another about the plug-in axis (S),
so that each first plug connector (24) is arranged opposite a corresponding second plug connector (44) parallel to the plug-in axis (S).

9. The coupling system according to claim 8,
wherein the first and/or the second driver geometry (26, 46) is formed as a plane surface which is inclined to a plane perpendicular to the plug-in axis (S).

10. The coupling system according to one of claims 8 or 9,
wherein a securing projection (51) is formed on or adjacent to the first or second driver geometry (26, 46), which can be brought into engagement with a corresponding securing recess (52) on or adjacent to the opposite driver geometry (26, 46).

11. The coupling system according to any one of the preceding claims,
wherein the first plug unit (2) is designed to be rotatable about the plug-in axis (S) relative to the king pin (A),
wherein the adjuster unit (6) and the second plug unit (4) are arranged on the coupling plate (B),
wherein the adjuster unit (6) is guided on the coupling plate (B) so as to be displaceable along the adjusting axis (T).

12. The coupling system according to any one of the preceding claims,
wherein the adjuster unit (6) comprises a housing (64),
wherein the guide section (62) is integrally formed on the housing (64).

13. The coupling system according to any one of the preceding claims,
wherein the first and second plug connectors (24, 44) comprise first and second electrical connectors (24A, 44A) and first and second fluid transfer connectors (24B, 44B).

14. The coupling system according to any one of the preceding claims,
wherein the adjuster unit (6) has an actuating section (66) at which a force acting parallel to the adjusting axis (T) can be introduced into the adjuster unit (6).

## Revendications

1. Système d'attelage pour une sellette d'attelage, comprenant une première unité d'enfichage (2) et une deuxième unité d'enfichage (4),
dans lequel
la première unité d'enfichage (2) peut être immobilisée dans le pivot central (A) d'une sellette d'attelage,
la deuxième unité d'enfichage (4) est disposée dans la zone de la plaque d'attelage (B) de la sellette d'attelage,
la première unité d'enfichage (2) présente une pluralité de premières connexions d'enfichage (24),
la deuxième unité d'enfichage (4) présente une pluralité de deuxièmes connexions d'enfichage (44) qui sont conçues pour s'engager avec les premières connexions d'enfichage (24) et pour transférer de l'énergie et/ou du fluide à celles-ci, et
il est prévu au moins une unité de positionnement (6) qui présente au moins une portion de guidage (62) qui peut être amenée en engagement avec un élément de retenue (42) de la deuxième unité d'enfichage (4), afin de transmettre une force, agissant le long de l'axe d'enfichage (S) ou parallèlement à celui-ci, depuis l'unité de positionnement (6) à l'unité d'enfichage (4), laquelle force déplace la deuxième unité d'enfichage (4) le long de l'axe d'enfichage (S) ou parallèlement à celui-ci vers la première unité d'enfichage (2) opposée ou bien en éloignement de celle-ci,
l'unité de positionnement (6) peut être déplacée transversalement et transversalement à l'axe d'enfichage (S) ou peut tourner autour de l'axe d'enfichage (S), pour appliquer la force,
la première unité d'enfichage (2) présente une géométrie extérieure sensiblement cylindrique,
**caractérisé en ce que**
une bride de retenue (28) est réalisée sur la géométrie extérieure cylindrique de la première unité d'enfichage (2) et sert à empêcher un déplacement parallèlement et de préférence également transversalement à l'axe d'enfichage par rapport au pivot central, tout en permettant simultanément une rotation autour de l'axe d'enfichage par rapport au pivot central.

2. Système d'attelage selon la revendication 1,
dans lequel la première unité d'enfichage (2) et la deuxième unité d'enfichage (4) sont bloquées à l'encontre d'un déplacement transversalement à l'axe d'enfichage (S).

3. Système d'attelage selon l'une des revendications précédentes,
dans lequel l'unité de positionnement (6) ne peut être déplacée que le long d'un axe de positionnement (T) et est par ailleurs bloquée à l'encontre d'un déplacement par rapport au pivot central (A) ou à la plaque d'attelage (B).

4. Système d'attelage selon la revendication 3,
dans lequel l'axe de positionnement (T) s'étend perpendiculairement à l'axe d'enfichage (S).

5. Système d'attelage selon l'une des revendications 3 ou 4,
dans lequel la portion de guidage (62) présente une première extrémité distale (62A) et une deuxième extrémité distale (62B) décalée par rapport à la première extrémité (62A) parallèlement à l'axe de positionnement (T), et la première extrémité (62A) et la deuxième extrémité (62B) ont un décalage (62C) l'une par rapport à l'autre mesuré perpendiculairement à l'axe de positionnement (T).

6. Système d'attelage selon la revendication 5,
dans lequel la première extrémité (62A) et la deuxième extrémité (62B) sont espacées l'une de l'autre d'une longueur de guidage (62D) mesurée parallèlement à l'axe de positionnement (T).

7. Système d'attelage selon l'une des revendications 5 ou 6,
dans lequel la première et/ou la deuxième extrémité (62A, 62B) présente(nt) une portion d'enclenchement (62E).

8. Système d'attelage selon l'une des revendications précédentes,
dans lequel la première unité d'enfichage (2) présente une première géométrie d'entraînement (26) et la deuxième unité d'enfichage (4) présente une deuxième géométrie d'entraînement (46), et
les première et deuxième géométries d'entraînement (26, 46) sont réalisées de manière à s'engager mutuellement, lors du rapprochement des unités d'enfichage (2, 4) l'une de l'autre, et à entraîner une rotation et/ou un alignement des première et deuxième connexions d'enfichage (24, 44) l'une par rapport à l'autre autour de l'axe d'enfichage (S), de sorte que chaque première connexion d'enfichage (24) est disposée à l'opposé d'une deuxième connexion d'enfichage correspondant (44) parallèlement à l'axe d'enfichage (S).

9. Système d'attelage selon la revendication 8,
dans lequel la première et/ou la deuxième géométrie d'entraînement (26, 46) est formée comme une surface plane qui est inclinée par rapport à un plan perpendiculaire à l'axe d'enfichage (S).

10. Système d'attelage selon l'une des revendications 8 ou 9,
dans lequel une saillie de blocage (51) est réalisée sur ou à proximité de la première ou de la deuxième géométrie d'entraînement (26, 46), saillie qui peut être amenée en engagement avec une échancrure de blocage correspondante (52) sur ou à proximité de la géométrie d'entraînement (26, 46) opposée.

11. Système d'attelage selon l'une des revendications précédentes,
dans lequel la première unité d'enfichage (2) est conçue de manière à pouvoir tourner par rapport au pivot central (A) autour de l'axe d'enfichage (S),
l'unité de positionnement (6) et la deuxième unité d'enfichage (4) sont disposées sur la plaque d'attelage (B), et
l'unité de positionnement (6) est guidée sur la plaque d'attelage (B) de manière à pouvoir être déplacée le long de l'axe de positionnement (T).

12. Système d'attelage selon l'une des revendications précédentes,
dans lequel l'unité de positionnement (6) comprend un boîtier (64), et
la portion de guidage (62) est réalisée d'un seul tenant sur le boîtier (64).

13. Système d'attelage selon l'une des revendications précédentes,
dans lequel les premières et les deuxièmes connexions d'enfichage (24, 44) comprennent des premières et des deuxièmes connexions électriques (24A, 44A) et des premières et des deuxièmes connexions de transfert de fluide (24B, 44B).

14. Système d'attelage selon l'une des revendications précédentes,
dans lequel l'unité de positionnement (6) présente une portion d'actionnement (66) au niveau de laquelle une force agissant parallèlement à l'axe de positionnement (T) peut être introduite dans l'unité de positionnement (6).
